# EUROPEAN PATENT APPLICATION

(11) **EP 0 628 346 A2**
(43) Date of publication of application: **14.12.1994**
(21) Application number: 93306305.9
(22) Date of filing: 09.08.1993
(51) Int. Cl.: B01J 20/28, B01J 20/34, B01D 53/26

(54) **A sorbing sheet and a sorbing laminate**

(30) Priority: 07.06.1993 EP 93304423
(71) Applicant: KABUSHIKI KAISHA SEIBU GIKEN, Kasuya-gun Fukuoka-Ken (JP); Kuma, Toshimi, Fukuoka-shi Fukuoka-ken (JP)
(72) Inventor: Kuma, Toshimi, Fukuoka-shi, Fukuoka-ken (JP)
(74) Representative: Seaborn, George Stephen

(57) **Abstract**

A resistor such as a resistor wire is contained in a sheet, preferably a low density sheet mainly consisting of inorganic fibre. Adsorbent or absorbent (called "sorbent" collectively) is fixed to the sheet mentioned above, to obtain a sorbing sheet, so that desorption and reactivation can be proceeded by applying an electric current to the resistor to heat the sheet. Also a sorbing laminate with many channels is made by laminating the sorbing sheets mentioned above. The sorbing sheet can be heated directly by the resistor contained in the sheet, therefore, sorbates can be desorbed rapidly and the time for reactivating the sorbing sheet can be reduced, and also the reactivation efficiency can be markedly increased.

## Description

### Field of the Invention

The present invention relates to a sorbing sheet incorporating means for reactivating the sheet and optionally for restoring, at least to some extent, the activity of the sheet. The sheet may be suitable for sorbing and removing substances, such as water vapour, organic solvent vapour and substances having offensive odours contained, for example, in the air. The invention also relates to a sorbing laminate made by laminating alternately one or more sorbing sheets as mentioned above and one or more corrugated sorbing sheets to form a honeycomb structure or made by laminating the sorbing sheets as mentioned above with spacers placed between the sheets.

### Description of the Prior Art

As a desiccative body, there has been used an inorganic fibre sheet laminated and formed into a honeycomb structure and which is impregnated with humidity absorbent such as lithium chloride or calcium chloride or humidity adsorbent such as silica gel, alumina gel or hydrophilic zeolite rigidly or firmly fixed. In Japanese Patent Application no. 86969/1985 (published without examination: no. 252497/1986), the applicant of the present application et al. proposed a method of obtaining an extremely desiccative honeycomb adsorbing body consisting mainly of metal silicate aerogel with a matrix of inorganic fibre by forming a low-density sheet using inorganic fibre such as ceramic fibre into a honeycomb structure, which is impregnated with water glass, then is soaked in aqueous solution of metallic salt to produce metal silicate hydrogel, and is washed and dried. The applicant of the present application also proposed in International application no. PCT/JP 91/00592 a gas adsorbing element having high efficiency of adsorbing and removing organic solvent vapour and odour constituent, which is obtained by fixing, by inorganic binder, highly hydrophobic high-silica zeolite to a honeycomb body made of a sheet consisting mainly of ceramic fibre. Reactivation of the honeycomb adsorbing body has been effected by passing hot air at 100-150°C through small channels of the honeycomb body.

### Summary of the Invention

The term "sorb" is hereinafter used to embrace both "absorb" and "adsorb".

When the above-mentioned desiccative body absorbs or adsorbs humidity to a certain extent, its sorbing capacity gradually decreases. Moreover, when absorbent is used, dew condensation or some other troubles or problems occur. Therefore its sorbing capacity must be recovered by purging sorbed humidity, i.e., by desorption. For this desorption, i.e., reactivation, heating is used in the thermal swing method and pressure decrease in the pressure swing method. However in the pressure swing method, the equipment and the process necessarily are of a large scale. Therefore simple heating, heating by hot air in particular, is adopted. Heating by heat conduction between hot air and the wall of the sorbing body is used to desorb the sorbed humidity, i.e., water by passing hot air through small channels of a honeycomb desiccative body. However, when a hot air stream is passed through the small channels to desorb the adsorbed humidity, the temperature of the stream is high at the inlet of the small channels, but the temperature decreases gradually and the reactivating ability decreases sharply near the outlet. Completely the same disadvantages pertain in the case of desorbing various active materials other than water vapour such as organic solvent vapour and offensive odour materials.

An object of the present invention is to overcome the above-mentioned disadvantages and to provide a sorbing sheet such as a desiccative sheet, which is able to perform desorption and reactivation easily, surely and, moreover, with little heat energy, and a honeycomb-shaped sorbing laminate which is made by laminating and forming the above-mentioned sorbing sheet and a corrugated sorbing sheet, and also another sorbing laminate.

In accordance with the present invention there are provided a sorbing sheet, which made by synthesizing and fixing adsorbent by chemical reaction in the inside of and on the surface of a sheet containing resistor or by impregnating with and rigidly adhering sorbent, and also a sorbing laminate made by laminating the above-mentioned sorbing sheet and a corrugated sorbing sheet. In other words, when the sorbing sheet and the sorbing laminate of the present invention sorb active gases such as water vapour, organic solvent vapour, nitrogen dioxide and other offensive odour materials in the air, and when their sorbing capacity decreases, the sorbate can be desorbed and the sorbing sheet or laminate can be reactivated easily and surely in a short time and, what is more, with a very little heat energy by applying an electric current to resistor contained in the sheet and making them generate heat all over the sheet simultaneously and uniformly. On the other hand sorbing capacity of the sorbing sheet and the sorbing laminate gradually decreases by repeating sorption and desorption for a long time. In this case, the sorbate cannot be desorbed at a relatively low elevated temperature of e.g. 150°C. Therefore the sorbing sheet and the sorbing laminate can be invigorated (i.e. its sorbing capacity can be at least partially restored) by applying an electric current to heat it to a higher temperature e.g. 300 - 450°C.

### Brief Description of the Drawings

The invention is described below by way of example with reference to the accompanying drawings, wherein:
Fig. 1 is a plan view of sorbing sheet;
Fig. 2 is a left side view of the sheet shown in Fig. 1;
Fig. 3 is a diagram of equipment suitable for manufacturing the sorbing sheet of Fig. 1;
Fig. 4 is a partially enlarged plan view of the equipment of Fig. 3;
Fig. 5 is a perspective view of a corrugated sorbing sheet;
Fig. 6 is a plan view of a sorbing sheet according to the invention;
Fig. 7 is a right side view of the sorbing sheet of Fig. 6;
Fig. 8 is a plan view of a sorbing sheet according to the invention;
Fig. 9 is a cross section taken on line A - A of Fig. 8;
Fig. 10 is a plan of a sorbing sheet according to the invention;
Fig. 11 is a cross section taken on the line B - B of Fig. 10;
Fig. 12 is a plan view of equipment suitable for manufacturing the sorbing sheet of Figs. 10 and 11;
Fig. 13 is a plan view of a sorbing sheet;
Fig. 14 is a cross section taken on the line C - C of Fig. 13;
Fig. 15 is a plan view of a sorbing sheet;
Fig. 16 is a cross section taken on the line D - D of Fig. 15;
Fig. 17 is a perspective view of a single-faced corrugated sorbing sheet;
Fig. 18 is a perspective view of a honeycomb-shaped sorbing laminate;
Fig. 19 is a perspective view of a honeycomb-shaped sorbing laminate and shows an enlarged fragmentary section of Fig. 20;
Fig. 20 is a perspective view showing a part of a sorbing rotor;
Fig. 21 is a perspective view of another sorbing laminate;
Fig. 22 is an enlarged fragmentary view of part "e" in Fig. 21;
Fig. 23 is a perspective view of another honeycomb-shaped sorbing laminate;
Fig. 24 is a perspective view showing a method of using a sorbing laminate;
Fig. 25 is a cross section taken on the centre line showing the position of a switching valve 23 in Fig. 24 at the time of reactivation and at the time of cooling;
Fig. 26 is a cross section on the centre line showing the position of a switching valve 23 in Fig. 24 at the time of dehumidifying; and
Fig. 27 is a graph showing changes of temperature and humidity of process air and reactivation air in the sorbing laminate shown in Fig. 24.

### Detailed Description of the Preferred Embodiments

### Example 1

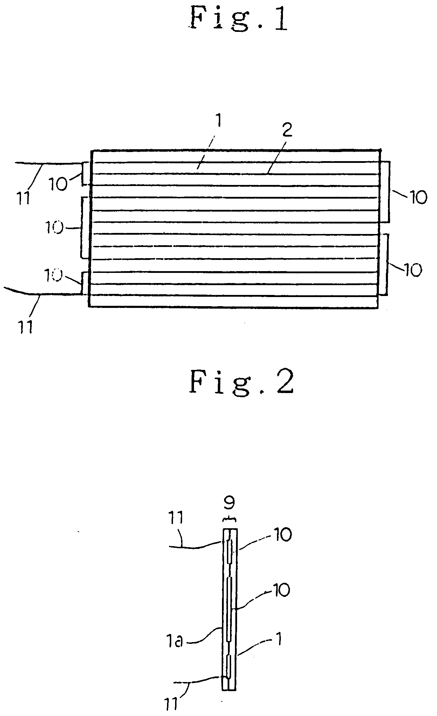

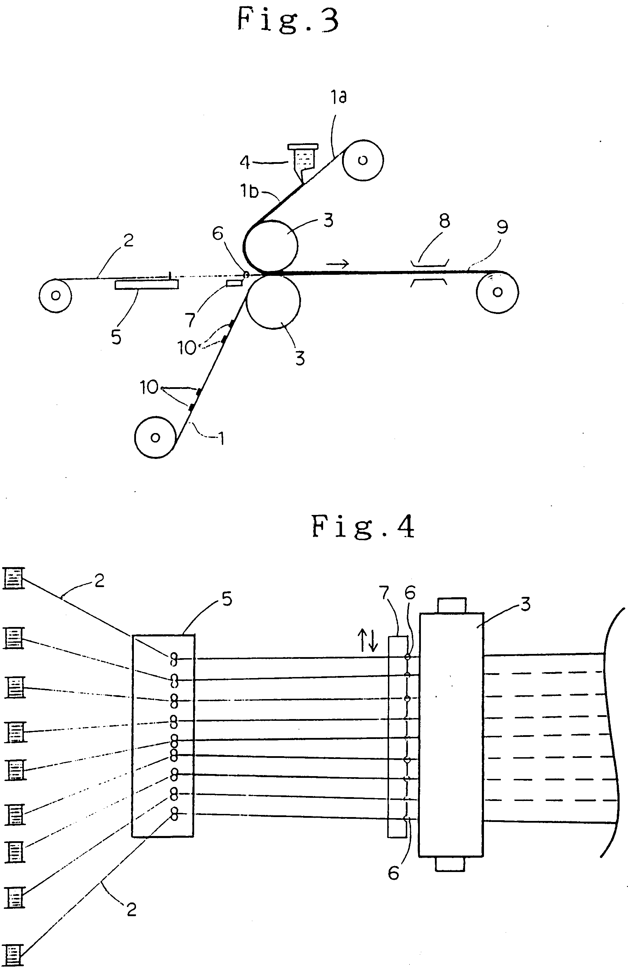

As shown in Figs. 1 and 2, to one of two 0.1 - 0.2 mm thick low density sheets 1, 1a mainly consisting of ceramic fibre, adhesive, preferably inorganic adhesive, is applied. The sheets 1, 1a are adhered together placing many resistor wires 2 between them. In placing and adhering resistor wires 2 between sheets 1, 1a, as shown in Figs. 3 and 4, for example, placed are rolled sheets 1, 1a, many resistor wires 2, 2 rolled around bobbins, pressing rollers 3, 3, an adhesive applying device 4, and as shown in Fig. 4, a guide 5 and a frame 7 with resistor wire inserting rings 6, 6 in a line. The resistor wires 2 and electrodes 10, 10 are bonded by heating. The sheet 1 and the sheet 1b, prepared by applying adhesive to the sheet 1a by the adhesive applying device 4, are passed between the pressing rollers 3, 3, the resistor wires 2, 2 are put between the sheets 1 and 1b. The adhesive is heated and hardened by a heater 8, and the sheet 9 with resistor wires put between and contained is rolled up. the resistor wires 2, 2 are placed at intervals of about 2 - 4 mm. the resistor wires 2 and the electrodes 10 are buried in the sheet 9.

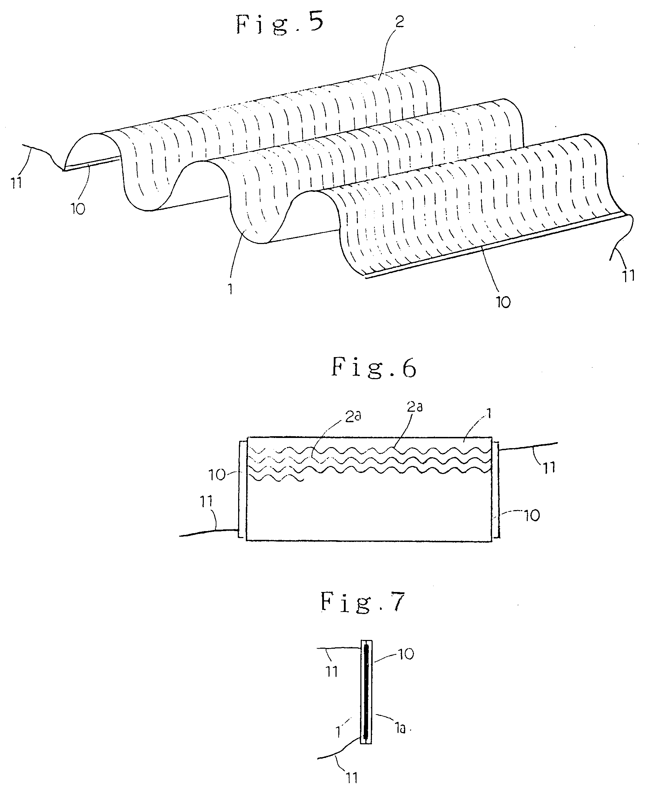

The sheet 9 is cut as shown in Fig. 1. Lead wires 11, 11 are connected to the electrodes 10, 10. The consumed electrical power can be determined by suitably dividing the electrodes as shown in Fig. 1 and controlling the electric resistance of the sheet 9. The sheet is soaked in a 25 - 30 % aqueous solution of water glass. After it has dried it is soaked in a 21% aqueous solution of aluminium sulphate to produce hydrogel of aluminium silicate by reaction of the water glass and the aluminium sulphate. It is washed and dried to obtain an adsorbing sheet with which aerogel of aluminium silicate is combined. Alternatively after the lead wires 11, 11 have been combined, the sheet is corrugated as shown in Fig. 5. Metal silicate gel is synthesized and fixed inside the corrugated sheet by the above-mentioned chemical reaction to obtain a corrugated adsorbing sheet. The electricity consumption of resistor wires 2 is set so that the surface of the adsorbing sheet becomes about 70 - 180°C when a current is applied to the wires for reactivation.

### Example 2

As shown in Figs. 6 and 7, to one or both of two 0.1 - 0.2 mm thick low density sheets 1, 1a mainly consisting of ceramic fibre, adhesive, preferably an inorganic adhesive, is applied. Both sheets are adhered together placing many resistor wires 2a in parallel and in zigzag lines. In placing and adhering the resistor wires 2a between sheets 1, 1a in zigzag lines, the equipment and the method shown above in Figs. 3 and 4, for example, are used. In Figs. 3 and 4, resistor wires 2a, 2a can be adhered between sheets 1, 1a continuously in parallel and in zigzag lines by forming the frame 7 capable of swinging sideways, by passing the resistor wires 2a, 2a through the resistor wire inserting rings 6, 6, and by reciprocating the sideway swinging frame 7 immediately before the pressing rollers 3, 3 in the widthwise direction of the sheets 1, 1a as shown by arrows in Fig. 4, to obtain a sheet 9.

The resistor wires 2a are connected to electrodes 10, 10 in parallel and to lead wires 11, 11, as shown in Fig. 6. Then the laminated sheet 9 is soaked in a 25 - 30 % aqueous solution of water glass. After the water glass has dried, the sheet is soaked in dilute sulphuric acid to produce silica hydrogel combined to the sheet by reaction of water glass and sulphuric acid. The sheet is washed and dried to obtain an adsorbing sheet to which silica aerogel is combined. The electricity consumption of resistor wires 2a is selected so that the surface of the adsorbing sheet becomes about 80 - 180°C when a current is applied to the wires for reactivation. The wave length of waves of resistor wires 2a is set at 2 - 5 mm and the interval of adjacent resistor wires 2a, 2a at about 1 - 5 mm.

### Example 3

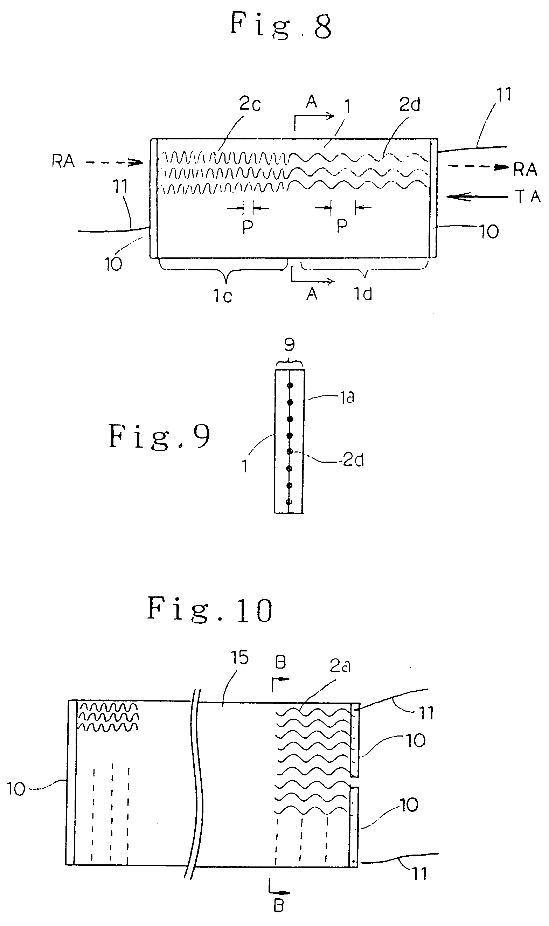

As shown in Figs. 8 and 9, to one of two 0.15 - 0.25 mm thick low density sheets 1, 1a mainly consisting of glass fibre, many resistor wires are placed all over the surface in parallel and in zigzag lines, and adhered with wave pitch formed small in the part 1c in the direction of the length of the sheet 1 and large in the rest of the sheet 1, that is part 1d. In this placing and adhering the resistor wires between sheets 1 and 1a, the equipment and the method of Figs. 3 and 4 are used. When the resistor wires 2 are passed through resistor wire inserting rings 6, 6 and the sideway swinging frame 7 is reciprocated in the direction of the arrows in Fig. 4, i.e., in the direction of the width of the sheet 1 immediately before pressing rollers 3, 3, the part 2c with small wave pitch and the part 2d with large wave pitch are alternately formed as shown in Fig. 8 by changing the rotation speed of the pressing roller 3, i.e., moving speed of the sheets and resistor wires or by changing swinging period of the sideway swinging frame 7 and at the same time resistor wires 2c, 2d are put and adhered between the sheet 1 and the sheet 1a. The laminated sheet is further sent forward to heat and harden the adhesive by the heater 8 and the sheet 9 is rolled up.

The sheet 9 with resistor wires 2c, 2d of different pitch P placed is cut as shown in Fig. 8. The part 1c of the sheet is impregnated with inorganic binder sol with zeolite powder dispersed therein to rigidly adhere. The part 1d of the sheet is fixed and combined with hydrogel of aluminium silicate as same as in the case of Example 1. The sheet is washed and dried to obtain an adsorbing sheet to part 1c of which zeolite is combined and to part 1d of which aerogel of aluminium silicate is combined. Resistor wires 2c, 2d are connected with electrodes 10, 10 as shown in fig. 8 and lead wires 11, 11 are connected with the electrodes to obtain an adsorbing sheet. The electricity consumption of resistor wires 2c, 2d is set so that the surface of the adsorbing sheet becomes about 150 - 200°C in the part 1c and about 80 - 130°C in the part 1d when a current is applied to the wires for reactivation. To the parts 1c and 1d, adsorbents having different reactivating temperatures such as minute particles of alumina gel and active carbon in combination can be combined and rigidly fixed respectively. When one adsorbing sheet is thus divided into a high-temperature reactivating part and a low-temperature reactivating part and outer air TA is sent in the direction shown by the arrow TA, for example, a large amount of water vapour is adsorbed in the part 1d to which metal silicate gel is fixed because diameters of micropores of metal silicate gel are as large as 20 - 30Å, and in the part 1c because highly desiccative zeolite with small diameters (4Å) of micropores is fixed, the remaining very little water vapour can be adsorbed by said zeolite. Thus dry air with low dew-point can be obtained. Reactivation temperature as high as 150 - 200°C is necessary in the part 1c and reactivation temperature of 80 - 130°C in the part 1d.

As another case, an adsorbing sheet is formed in which the part 1c has no absorbability and is used as a preheating part for outer air. That is, when the temperature of the outer air is low, the outer air as reactivation air RA is preheated at this part 1c and thereafter the outer air is passed in part 1d, that is adsorption part, and the air is discharged so that the water vapour desorbed at 1d part forms no dew condensation.

### Example 4

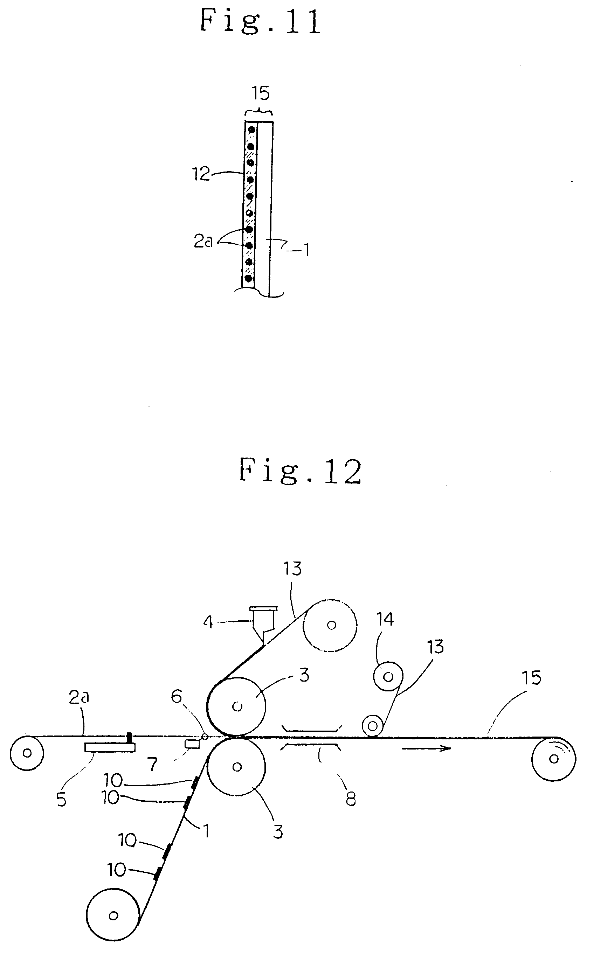

As shown in Figs. 10 and 11, to one side of a 0.1 - 0.2 mm thick sheet 1 mainly consisting of ceramic fibre, resistor wires 2a are placed in parallel and in zigzag lines and buried in electricity insulating coating agent 12. The equipment shown in Figs. 4 and 12 is used for this process. This equipment is almost similar to that explained in Figs. 3 and 4. As shown in Fig. 12, prepared are a sheet 1, a rolled separator film such as a polyester film 13, many resistor wires 2a, 2a rolled around bobbins, and coating agent applying equipment 4. To one side of the separator film 13 coating agent is applied by the coating agent applying equipment 4. Resistor wires 2a are placed in parallel and in zigzag lines and adhered between the sheet 1 and the separator film 13. The sheet is advanced, the coating agent is dried, and the separator film 13 is rolled up around a roll 14 to obtain a sheet 15 on which resistor wires 2a are buried in the layer of coating agent 12. On the other hand, as shown in Fig. 12, electrodes 10, 10, preferably plated with solder, are fixed at a desired interval on the surface of the sheet 1 beforehand. As coating agent, it is desirable to use one that contains chemical blowing agent which decomposes and generates foams, when it is heated by the heater 8 and hardens, to form communicating pores in the layer of coating agent so that adsorbent is able to contact with outer air. Resistor wires 2a and electrodes 10 buried in the sheet 15 are heated from outside the sheet 15 and combined by melting.

The obtained sheet 15 is impregnated with an inorgaric reinforcing agent which is rigidly fixed. Then it is soaked in 30% aqueous solution of lithium chloride and dried. The sheet 15 is rigidly fixed with about 5 - 8 weight per cent lithium chloride. The sheet 15 is cut off with electrodes 10, 10 left on both ends and lead wires 11, 11 are connected to electrodes 10, 10, as shown in Fig. 10, to obtain an absorbing sheet having desiccative capacity. The electricity consumption is selected so that the surface of the sheet becomes about 60 - 180°C when applying a current for reactivation.

### Example 5

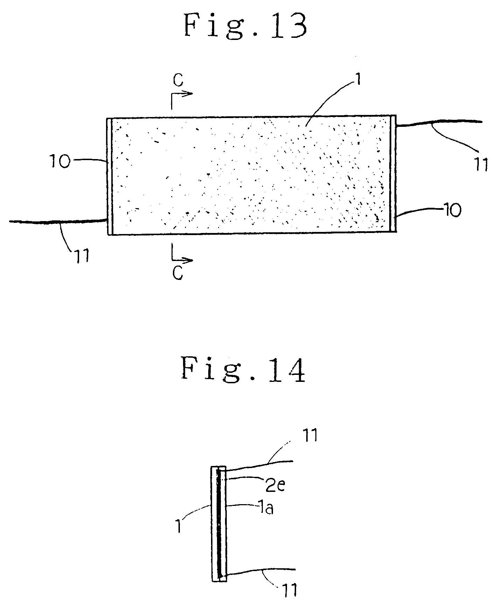

As shown in Figs. 13 and 14, 0.1 - 0.2 mm thick low density sheets 1, 1a mainly consisting of ceramic fibre are prepared. To one side of one sheet 1, electrically conductive paint such as a paste, which is made by mixing minute particles of carbon silver or other electrically conducting materials into synthetic resin and by dispersing them in organic solvent, is applied. The other sheet 1a is adhered to the paint-applied surface and the laminated sheet is dried and is given sorbing capacity by a method similar to Examples 1 - 4. Electrodes 10, 10 are connected to the electrically conductive coating 2e on the sheet and lead wires 11, 11 are connected to electrodes 10, 10 to obtain a sorbing sheet. The composition and thickness of the electrically conductive coating 2e on the sheet are adjusted so that the surface of the sorbing sheet becomes about 80 - 150°C when a current is applied for reactivation.

### Example 6

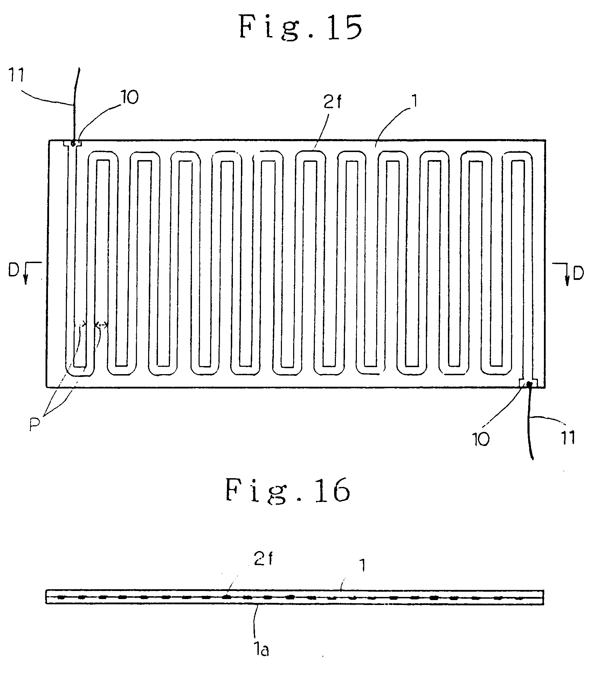

As shown in Figs. 15 and 16, two 0.1 - 0.2 mm thick low-density sheets 1, 1a mainly consisting of ceramic fibre are prepared. A plane-type resistor 2f, which is made by forming an electric heat circuit by etching metal foil, several tens of microns (µ) thick, for example copper foil or aluminium foil, is placed and adhered between sheets 1 and 1a. Terminals 10, 10 and lead wires 11, 11 are connected to the both ends of this resistor. Then adsorbent is combined and rigidly fixed on and in sheets 1, 1a to obtain an adsorbing sheet. The pitch P of the electric heat circuit of metal film may be small on one side and large on the other side so that the temperature of the adsorbing sheet when a current is applied can be changed locally.

In Examples 1 - 4 mentioned above, resistor wires of 0.1 - 0.2 mm diameter of nickel chrome alloy, nickel copper alloy or others are used naked or with appropriate insulating coating of polytetrafluoroethylene, 5 - 10 microns (µ) thick, or of others. In Examples 1 - 6, as a sheet for a basic body, a porous sheet which is an electrical insulator and which can be impregnated with sorbent can be sued. In order to prevent the outbreak of a fire or other accidents by heat, desirable are a sheet mainly consisting of inorganic nonflammable fibre such as ceramic fibre and glass fibre, active carbon fibre and heat-resistant synthetic fibre: nonflammable paper, or appropriate paper containing active carbon. Metal silicate gel, zeolite, active silica gel, active alumina gel, Japanese acid clay, porous glass, active carbon, ion-exchange resin or chelate resin may be used as adsorbent, and desiccative salts such as lithium chloride, lithium bromide and calcium chloride as absorbent. For desiccative purpose minute particles of zeolite with micropore diameters of 3 - 10 Å is used, and for adsorbing and removing organic solvent vapours, odorous materials and other substances, zeolite with micropore diameters of 6 - 12 Å or minute particles of high silica zeolite may be used.

### Example 7

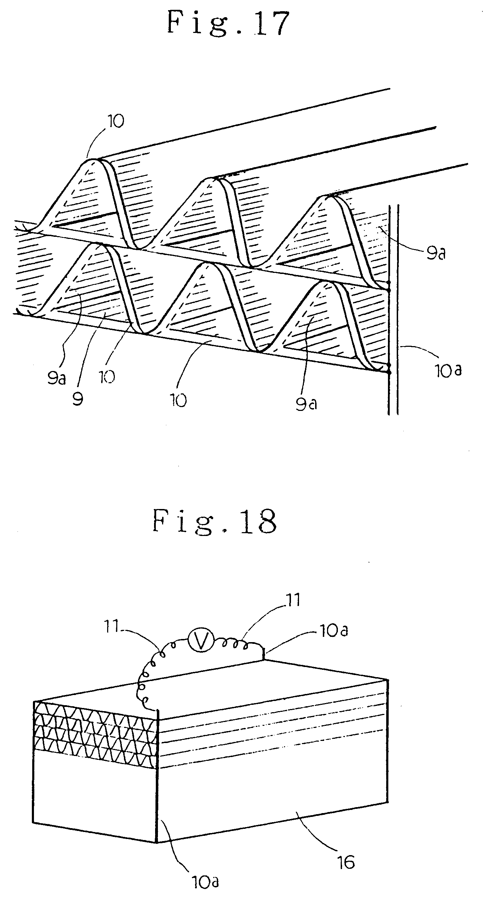

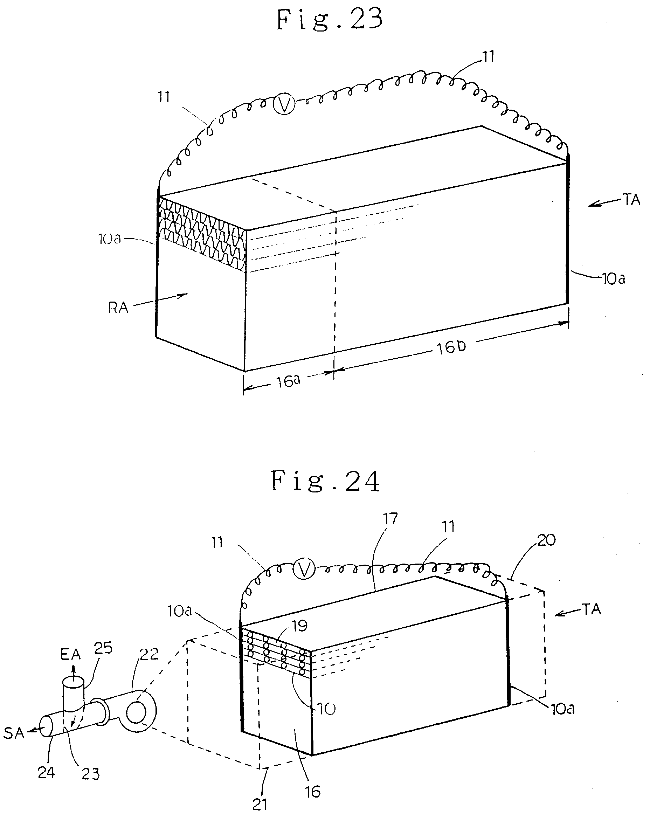

Lead wires 11 are removed from the absorbing sheet 9 shown in Figs. 1 and 2 in Example 1, and lead wires 11 are removed from the corrugated adsorbing sheet 9a shown in Fig. 5. Both sheets are adhered as shown in Fig. 17 to obtain a single-faced corrugated sheet. It is the same in the case of the adsorbing sheet to which resistor wires 2a are placed in zigzag lines in Example 2 and in the cases of Examples 3 - 6. These single-faced corrugated sheets are piled up with or without being adhered together to form a parallelepiped honeycomb block 16 as shown in Fig. 18. When it is piled up without being adhered, the whole is put in a frame 17 as shown in Fig. 24. Both ends of each electrode 10, 10 of each adsorbing sheet are connected to electrodes 10a, 10a which are connected to lead wires 11, 11 and to a power source to obtain a honeycomb-shaped sorbing laminate.

### Example 8

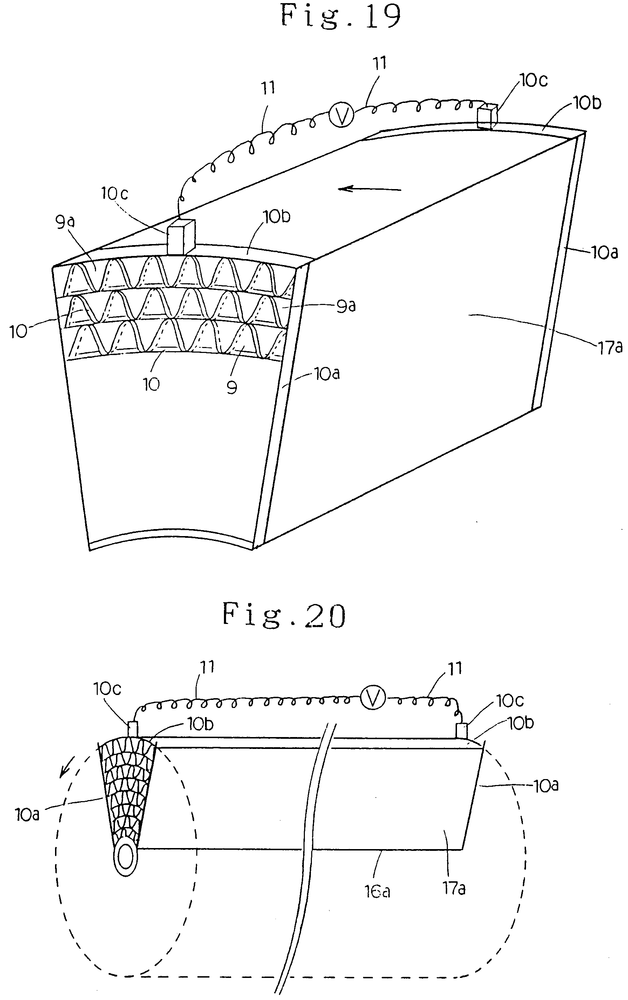

As shown in Fig. 19, the single-faced corrugated sheets mentioned above are piled up, the single-faced corrugated sheets being adhered or being not adhered to each other, and the whole pile is put in a frame 17a. An end of each electrode 10 of each adsorbing sheet is connected to electrodes 10a, 10a. Electrodes 10b, 10b are fixed along the outer peripheries of the honeycomb laminate and connected with electrodes 10a, 10a to get a honeycomb-shaped sorbing laminate shaped as a section of a sector. A cylindrical sorbing rotor can be constructed as shown in Fig. 20 by assembling a suitable number of such honeycomb-shaped sorbing laminates shaped as sections of a sector.

Stationary electrodes 10c, 10c are slidingly connected to electrodes 10b, 10b of a honeycomb-shaped sorbing laminate, and lead wires 11, 11 are connected to the electrodes 10c, 10c and a power source. The cylindrical sorbing rotor as shown in Fig. 20 is rotated as shown by an arrow in Fig. 20, and each honeycomb-shaped sorbing laminate can be reactivated successively by applying an electric current to it.

### Example 9

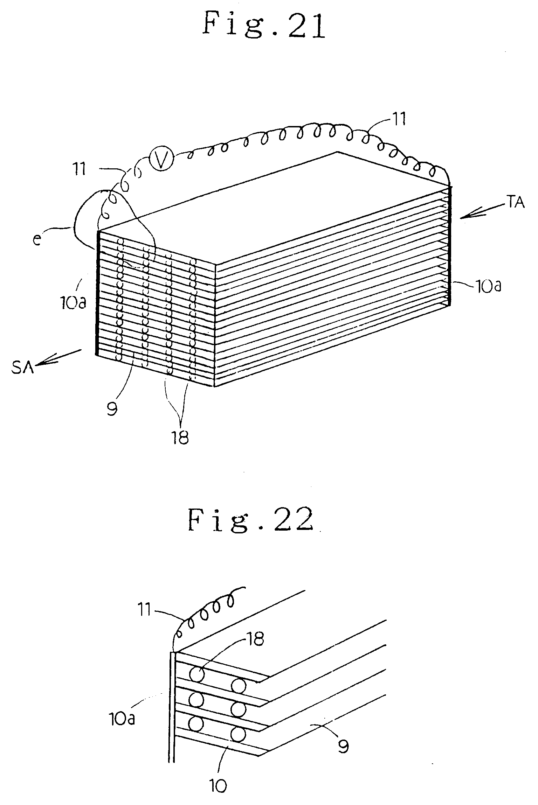

Plane adsorbing sheets 9 as mentioned above are laminated, putting spacers 18 between the adsorbing sheets to obtain a block with gaps between plane adsorbing sheets as shown in Figs. 21 and 22. An end of each electrode 10 of each adsorbing sheet is connected to an electrode 10a, and each electrode 10a is connected to lead wire 11, and each lead wire is connected to a power source to form a sorbing laminate.

### Example 10

The parallelepiped honeycomb block 16 shown in Fig. 18 is divided into two parts in the direction of penetration of small channels as shown in Fig. 23. Sorbent is not fixed to one part 16a and is rigidly fixed to the other part 16b. Resistor is placed all over the surface of 16a, 16b as in Examples 1 - 6, to form a honeycomb-shaped sorbing laminate. It is possible to make the density of resistor high in the part 16a and low in the part 16b.

### Action of the Invention

The sorbing sheet of the present invention is used for dehumidification/drying and humidity control of air and for sorption/removal of odorous materials and organic solvent vapour in airtight rooms such as semi-conductor factories, paint booths, film factories and warehouses and in airtight containers. When sorbent in the sorbing sheet is saturated with humidity or odorous materials or the sorbing capacity of the sorbing sheet decreases by humidity or odour materials, a current is applied to its resistor to heat the sorbing sheet and sorbate is desorbed. After this, sorption and reactivation are repeated to provide dry air or clean air. When a sheet containing active carbon fibre as a main component or a suitable paper containing active carbon is used as sheets 1, 1a, impregnated sorbent and also sheets 1, 1a themselves sorb active materials to improve the sorbing efficiency of the sorbing sheet. When sorption and desorption are repeated for a long time, oil-like material of a high boiling point is produced due to polymerization of sorbate and adheres to the sorbing sheet to decrease its sorbing capacity. In this case, watt density of resistor contained is increased to raise the temperature of the sorbing sheet to 200 - 400°C and is applied the current for 1 - 4 hours to decompose the oil-like material to invigorate the sorbing sheet (i.e. to restore wholly or partially the sorbing capacity of the sheet).

The sorbing laminate of the present invention is used to obtain dry air or clean air by passing gaseous body such as air containing active ingredients to be removed such as humidity, organic solvent vapour and offensive odour materials through its small channels for the sorbent to sorb and remove above-mentioned active ingredients on the wall of small channels. To explain it more concretely, as shown in Fig. 24, ducts 20, 21 are connected to small channels 19 appeared on both ends of the sorbing laminate 16, to which electrodes 10, 10a, 10a and lead wires 11, 11 are connected. A blower 22, a switching valve 23 and ducts 24, 25 are connected to the duct 21. The blower 22 is operated to send air TA to be processed from the duct 20 into the laminate. Active ingredients in air TA are sorbed and removed by the sorbing laminate 16, and then dry air or clean air SA is supplied through the duct 24. In desorption and reactivation, a current is applied to electrodes 10a, 10a to heat the sorbing laminate 16 to desorb sorbate. At the same time the switching valve 23 is switched as shown by a dotted line in the drawing and air TA is passed as reactivation air through the honeycomb-shaped sorbing laminate 16 from the duct 20. Exhaust air EA containing desorbed active ingredients passes through the duct 21 and the blower 22, and is exhausted from the duct 25.

### Effect of the Invention

Prior sorbing sheet has been reactivated indirectly using a large volume of hot air, i.e., by heat transportation by convection and radiation from hot air to solid sorbing wall. Therefore heat energy has not always been used efficiently. As the sorbing sheet of the present invention is formed as described above, the resistor contained in the sorbing sheet is directly adhered closely and combined in the sorbing sheet and by applying a current in it the sorbing sheet can be heated rapidly and uniformly all over the area for reactivation of sorbent. Therefore sorbed humidity and organic solvent vapour are rapidly and efficiently desorbed to reactivate the sorbing sheet. Thus a large quantity of heat energy can be saved compared with the prior reactivation system using hot air, and the sorbing efficiency can be elevated by about 30 - 40%.

In placing resistor wires in parallel and in zigzag lines to the sorbing sheet, placing density of the resistor wires can be further increased to make temperature unevenness less. It also has an effect of preventing sheet distortion by buffering difference in heat expansion of the basis sorbing sheet and of resistor wires. The adsorbing sheet with different zigzag densities of resistor wires can provide ultra-low dew point dry air by separately fixing zeolite having high reactivation temperature and high adsorbing force, and adsorbent such as active silica gel having low reactivation temperature and a large adsorption volume, and by introducing process air from the side of smaller zigzag density of resistor wires to adsorb and remove a large quantity of humidity by silica gel and almost all the remaining humidity by zeolite.

In hot air reactivation of a prior sorbing laminate, temperature difference of hot air at the inlet and at the outlet was great. Therefore reactivation was not completely performed in the whole area of the laminate and its sorbing capacity was inferior. For desorption and reactivation, the sorbing laminate of the present invention can be heated to desorb the sorbate rapidly and uniformly in the whole area by resistors contained in the whole area of the sorbing sheet constituting the laminate. Therefore, the present invention has an effect that desorption/reactivation can be proceeded in extremely shorter time and with extremely less heat energy for desorption compared with the desorbing method by heated air.

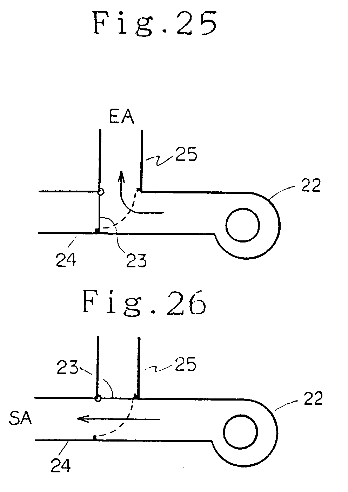

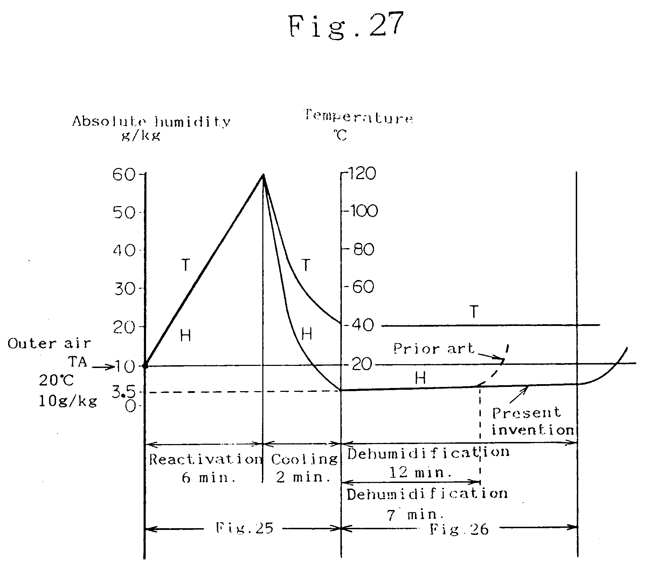

An apparatus as shown in Fig. 24 was constructed using the adsorbing laminate obtained by Example 9 using the adsorbing sheet shown in Fig. 6 prepared by Example 2. To this sorbing laminate was applied a current to heat, and after the switching valve 23 was arranged as shown in Fig. 25, outer air TA of temperature 20°C and absolute humidity 10 g/kg was sent in as a reactivation air at a speed of 0.5 m/sec. for 6 minutes (reactivation time). Thereafter, electric current for heating was stopped and the above-mentioned outer air was sent in as a cooling air for 2 minutes (cooling time). And then the switching valve 23 was arranged as shown in Fig. 26, and the above-mentioned outer air was sent in as a process air at a speed of 1.5 m/sec. for 12 minutes (dehumidifying time) to dehumidify the process air. Fig. 27 shows the temperature T and the absolute humidity H of air at the inlet of the sorbing laminate, and changes of temperature and absolute humidity of air at the outlet at the processes of reactivation, cooling and dehumidification. In the Fig. 27, broken line shows the absolute humidity of air at the outlet of the sorbing laminate when a hot air was sent in the prior honeycomb-shaped laminate as a reactivation air to heat and reactivate the honeycomb-shaped laminate.

As is clear from the drawing, prior honeycomb block decreases its dehumidifying faculty after about 7 minutes of dehumidifying in the case of 6 minutes of reactivation and 2 minutes of cooling. In the case of the adsorbing laminate containing reactivating function according to the present invention, dehumidification time was approximately 12 minutes when the reactivation time and the cooling time were set as above. This means the adsorbing laminate of the present invention has a dehumidification faculty approximately 1.8 times as of the prior art. In this case, a resistor of 1.2 kW was used for the consumed electric power, and the amount of outer air TA was 60m³/hr.

In the prior method of heating and desorption by introducing heated air, a thin boundary layer always cam out between air stream and honeycomb channel wall to prevent heat conduction. In the present invention, resistors are contained in the sheet itself constituting honeycomb wall, closely adhered and combined to one another. Therefore heat conduction can be performed extremely rapidly in reactivation process, and reactivation time is about half compared with the prior art using a hot air, and all the generated heat is used for reactivation. Moreover, as it is possible to heat to desorb sorbate only, no energy is wasted and only the latent heat capacity for desorbing sorbate is necessary and the energy for reactivation is reduced by half. By regulating heating time, temperature increase of the honeycomb laminate itself can be controlled. Thus it has a great effect that cooling time before the sorbing process can be shortened.

The invention may be summarized as follows:
A. Method of manufacturing an adsorbing sheet containing reactivating function and invigorating function therein, comprising chemically synthesizing and fixing an adsorbent in and on the surface of a sheet containing resistor, and connecting terminals to both ends of said resistor to make reactivation and invigoration possible by applying an electric current.
B. Method of manufacturing an adsorbing sheet containing reactivating function and invigorating function therein according to Summary A, including the steps of impregnating water glass in a sheet containing resistor and drying, impregnating aqueous solution of a metal salt in said sheet, and synthesizing metal silicate gel in and on said sheet by the reaction of water glass and metal salt, said metal silicate gel being fixed in and on said sheet.
C. Method of manufacturing an adsorbing sheet containing reactivating function and invigorating function therein according to Summary A, including the steps of
   impregnating water glass in a sheet containing resistor and drying,
   impregnating an acid in said sheet, and
   synthesizing silica gel in and on said sheet by the reaction of water glass and acid, said silica gel being fixed in and on said sheet.
D. Method of manufacturing a sorbing sheet containing reactivating function and invigorating function therein, comprising impregnating and rigidly adhering a sorbent in and on the surface of a sheet containing resistor, and connecting terminals to both ends of said resistor to make reactivation and invigoration possible by applying an electric current.
E. Method of manufacturing a sorbing sheet containing reactivating function and invigorating function therein according to Summary D, wherein said sorbent is an adsorbent selected from the group consisting of zeolite, silica gel, alumina gel and active carbon.
F. Method of manufacturing a sorbing sheet containing reactivating function and invigorating function therein according to Summary D, wherein said sorbent is an absorbent selected from the group consisting of lithium chloride and calcium chloride.
G. Method of manufacturing a sorbing sheet containing reactivating function and invigorating function therein according to Summaries A - F, in which resistor wires contained in the sorbing sheet are placed in parallel or in parallel and in zigzag lines.
H. Method of manufacturing a sorbing sheet containing reactivating function and invigorating function therein according to Summaries A - F, in which many resistor wires are placed in parallel buried in insulating coating agent on the surface of a sorbing sheet so that reactivation and invigoration can be proceeded by applying an electric current.
I. Method of manufacturing a sorbing sheet containing reactivating function and invigorating function therein according to Summaries A - F, in which sorbing sheet contains a plane-type resistor produced by the etching of metallic film.
J. Method of manufacturing a sorbing sheet containing reactivating function and invigorating function therein according to Summaries A - I, in which watt density of the sorbing sheet can be changed by changing placing density of resistor wires when said wires are placed in parallel and in zigzag lines.
K. Method of manufacturing a sorbing sheet containing reactivating function and invigorating function therein according to Summaries A - J, in which said sheet is a sheet mainly consisting of a fibre selected from the group consisting of inorganic fibre, carbon fibre, active carbon fibre and heat-resistant synthetic fibre.
L. A corrugated sorbing sheet produced by corrugating the sorbing sheet manufactured according to Summaries A - K.
M. A honeycomb-shaped sorbing laminate containing reactivating function and invigorating function, produced by alternately laminating the sorbing sheet and the corrugated sorbing sheet defined in Summary A and Summary L which contain or hold buried resistor wires, to form into honeycomb structure.
N. A sorbing laminate containing reactivating function and invigorating function, produced by laminating, with spacers placed between, sorbing sheets containing buried resistor wires.
O. A sorbing laminate containing reactivating function and invigorating function according to Summary M or N, in which a low density sheet mainly consisting of a fibre selected from the group consisting of inorganic fibre, carbon fibre, active carbon fibre and heat resistant synthetic fibre is used for the sorbing sheet and the corrugated sorbing sheet.

For the avoidance of doubt it is hereby stated that the above-mentioned summaries are not claims.

## Claims

1. A method of manufacturing a sorbing member or element, comprising providing a sheet containing a resistor, synthesizing and fixing a sorbent within and/or on the surface of the sheet, and connecting terminals to ends of the resistor whereby an electrical current can be passed through the resistor to heat the sorbent to reactivate it and optionally to restore at least partially the sorbing capacity thereof.

2. A method according to Claim 1, wherein the sorbent is synthesized and fixed to the sheet by impregnating the sheet with water glass, drying the sheet and impregnating the sheet with an aqueous solution of a metal salt whereby the water glass and the metal salt react to form a metal silicate gel as the sorbent.

3. A method according to Claim 1, wherein the sorbent is synthesized and fixed to the sheet by impregnating the sheet with water glass and drying the sheet and impregnating the sheet with an aqueous solution of an acid whereby the water glass and the acid react together to form silica gel as the sorbent.

4. A method of manufacturing a sorbing member or element, comprising providing a sheet containing a resistor, impregnating the sheet with and fixing a sorbent to the sheet, and connecting terminals to the resistors whereby an electrical current can be passed through the resistor to heat the sorbent to reactivate it and optionally to restore at least partially the sorbing capacity thereof.

5. A method according to Claim 4, wherein the sorbent is selected from zeolite, silica gel, alumina gel and active carbon.

6. A method according to claim 5, wherein the sorbent is selected from lithium chloride and calcium chloride.

7. A method according to any preceding claim, wherein the resistor comprises parallel resistor wires, optionally of zigzag configuration.

8. A method according to any preceding claim, wherein the resistor comprises resistor wires which are buried within an insulating coating on a surface of the sheet.

9. A method according to any preceding claim, wherein the resistor is a plane-type resistor and is produced by etching of a metallic film.

10. A method according to any preceding claim, wherein the resistor wires are arranged to provide a relatively high watt density in one area of the sheet and a relatively low watt density in another area of the sheet whereby differential heating of the sheet can be effected.

11. A method according to any preceding claim, wherein the sheet comprises predominantly fibre selected from inorganic fibre, carbon fibre, active carbon fibre and heat resistant synthetic fibre.

12. A method according to any preceding claim, further comprising corrugating the sheet.

13. A sorbing member or element comprising a sheet provided with an electrical resistor and a sorbent, terminals being connected to the resistor whereby an electrical current can be passed through the resistor to heat the sorbent to reactivate it and optionally to restore at least partially the sorbing capacity thereof.

14. A sorbing member or element according to claim 13, wherein the resistor is contained within the sheet.

15. A sorbing member or element according to claim 13 or 14, wherein the sorbent is within the sheet and/or on the surface of the sheet.

16. A sorbing member or element according to any of claims 13 to 15, wherein the resistor comprises resistor wires, which are optionally parallel and of straight or of zigzag configuration.

17. A sorbing member or element according to any of claims 13 to 16, wherein the resistor is within an electrically insulating coating on a surface of the sheet.

18. A sorbing member or element according to any of claims 13 to 15, wherein the resistor is an etched metallic film.

19. A sorbing member or element according to any of claims 13 to 18, wherein the resistor is disposed to provide a relatively high degree of heating in at least one part of the sheet and a relatively low degree of heating in at least one other part of the sheet.

20. A sorbing member or element according to any of claims 13 to 19, wherein the sheet comprises fibre selected from inorganic fibre, carbon fibre, active carbon fibre and heat-resistant synthetic fibre.

21. A sorbing member or element according to any of claims 13 to 20, being of corrugated configuration.

22. A sorbing laminate of honeycomb structure and comprising as laminae members or elements according to any of Claims 13 to 21 or produced by a method according to any of Claims 1 to 12 and wherein alternate sheets are in accordance with Claim 21 or produced by a method according to Claim 12.

23. A sorbing laminate comprising as laminae members or elements according to any of Claims 13 to 21 or produced by a method according to any of Claims 1 to 12, wherein the laminae are separated by spacers.

24. A sorbing laminate according to Claim 21, wherein the laminae are planar or otherwise uncorrugated.
